# FASCICULE DE BREVET EUROPEEN

(11) **EP 1 742 818 B1**
(45) Date de publication et mention de la délivrance du brevet: **18.12.2013**
(21) Numéro de dépôt: 05746924.9
(22) Date de dépôt: 07.04.2005
(51) Int. Cl.: B60R 19/34

(54) **BOITIER DE DEFORMATION POUR VEHICULE AUTOMOBILE**
CRASH BOX FÜR KRAFTFAHRZEUG
DEFORMATION BOX FOR A MOTOR VEHICLE

(30) Priorité: 23.04.2004 FR 0450770
(43) Date de publication de la demande: 17.01.2007
(73) Titulaire: Renault SAS, 92100 Boulogne Billancourt (FR)
(72) Inventeur: WILLEMENOT, Johann, F-92350 LE PLESSIS ROBINSON (FR); SZYMANSKI, Joel, F-78340 LES CLAYES SOUS BOIS (FR)
(74) Mandataire: Rougemont, Bernard
(86) Numéro de dépôt international: PCT/FR2005/050219
(87) Numéro de publication internationale: WO 2005/105528

(56) Documents cités:
- EP-A- 0 556 667
- EP-A- 0 650 868
- EP-A- 1 232 931
- US-A1- 2002 113 447

## Description

La présente invention concerne les boîtiers de déformation pour véhicules automobiles.

Elle concerne plus particulièrement les boîtiers de déformation, du type disposé entre une traverse de choc et la structure du véhicule, et qui comportent des amorces de pliage aptes à favoriser l'empilage de ce boîtier lors d'un choc subi par le véhicule, de sorte que le déplacement de la traverse vers la structure du véhicule est accompagné et amorti par la déformation des boîtiers.

Un dispositif avec de tels boîtiers est connu du US 2002/0113 447 A.

De façon connue, une structure avant de véhicule automobile comporte au moins deux bras longitudinaux, reliés par des montants verticaux à un berceau cadre qui s'étend en dessous desdits bras, une traverse de choc située en avant de ce berceau et sensiblement à la même hauteur; et un radiateur qui s'étend dans un plan perpendiculaire aux bras longitudinaux et qui est situé entre la traverse de choc et le berceau cadre. Ce radiateur porte des moyens anti-rotation disposés entre la partie supérieure du radiateur et les bras longitudinaux et porte des moyens de fixation dans sa partie basse qui sont soudés au berceau cadre.

Les normes de sécurité automobile imposent désormais que, en dessous d'une certaine vitesse de collision (par exemple 15 km/h pour les normes Danner), le berceau ne soit pas endommagé. Un mode de fixation de la partie inférieure du radiateur par rapport à la structure avant du véhicule au moyen d'au moins deux supports soudés au berceau cadre est contraignant dans cet optique de ne pas endommager le berceau. En effet, le radiateur, situé entre le berceau et la traverse de choc, est dans la zone d'impact et subit donc lors d'un choc un déplacement et des efforts transmis aux supports, qui transmettent ces efforts au berceau par l'intermédiaire de leur liaison, ce qui génère la déformation de ce berceau.

Dans une demande distincte déposée le même jour, la demanderesse a divulgué une structure avant caractérisé en ce que la fixation du radiateur dans sa partie inférieure est réalisée par une patte de support radial, qui assure une fixation du radiateur à une première extrémité basse et qui est soudée sur la traverse de choc, sensiblement au milieu de cette traverse, et par un support latéral, qui assure une fixation du radiateur à une deuxième extrémité basse. Le radiateur repose sur ces deux supports.

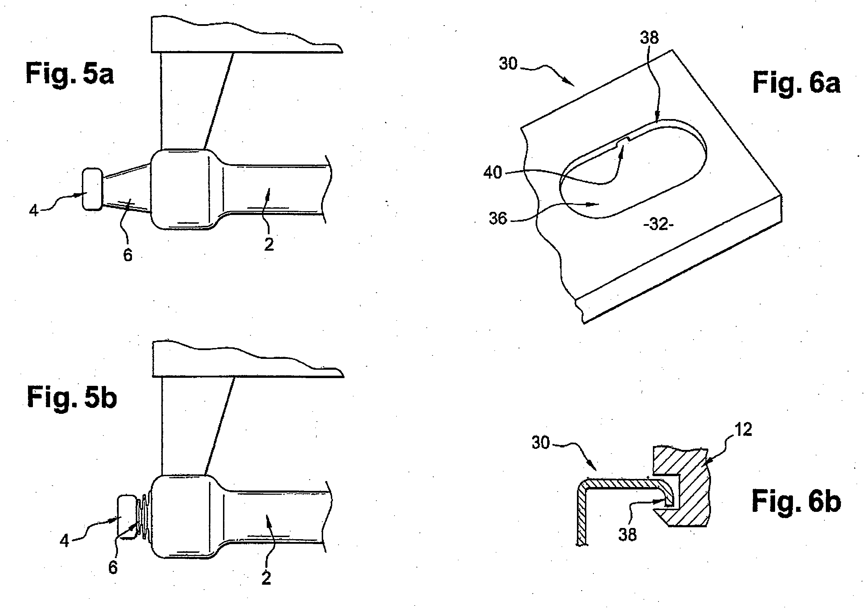

Les boîtiers de déformation plastique supportant les traverses de choc doivent présenter des caractéristiques fortes d'empilage. La figure 5a représente un tel boîtier avant un choc, dans une situation de repos. Le boîtier s'étend entre longitudinalement entre la traverse de choc et le berceau cadre du véhicule. Lors d'un choc frontal, le déplacement de la traverse vers la structure du véhicule est accompagné et amorti par la déformation des boîtiers. La figure 5b représente un boîtier compacté au maximum, de sorte que la traverse soit au plus près du berceau sans entrer en contact.

Il est connu de proposer des boîtiers de ce type qui présentent une forme tronconique dont la périphérie est ondulée, pour faciliter l'empilement en couches lors du choc et ainsi laisser un résidu le moins épais possible.

La présente invention vise à proposer un boîtier de déformation, du type disposé entre une traverse de choc et la structure du véhicule, et qui comportent des amorces de pliage aptes à favoriser l'empilage de ce boîtier lors d'un choc subi par le véhicule, de sorte que le déplacement de la traverse vers la structure du véhicule est accompagné et amorti par la déformation des boîtiers, caractérisé en ce que le boîtier présente une forme adaptée pour la fixation d'un élément fonctionnel du véhicule.

Selon différentes caractéristiques de l'invention :
- le boîtier présente une forme adaptée pour la fixation d'un radiateur dans une structure avant du véhicule,
- le boîtier présente une surface d'appui apte à recevoir un plot de fixation,
- la surface d'appui est munie d'un orifice et de bords tombés à la périphérie de cet orifice,
- un bord tombé de la surface d'appui présente un affaiblissement,
- le boîtier est formé de deux demi-boîtiers symétriques.

D'autres caractéristiques et avantages de l'invention apparaîtront à la lecture de la description détaillée qui suit pour la compréhension de laquelle on se reportera aux dessins annexés dans lesquels :
- la figure 1 est une vue de dessus d'une structure avant comprenant un boîtier de déformation selon l'invention,

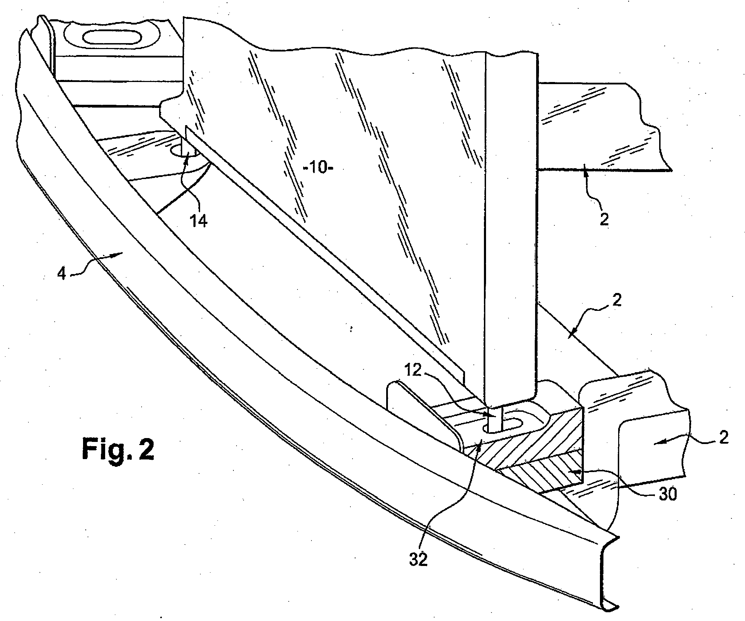

- la figure 2 est une vue en perspective de la structure avant de la figure 1,

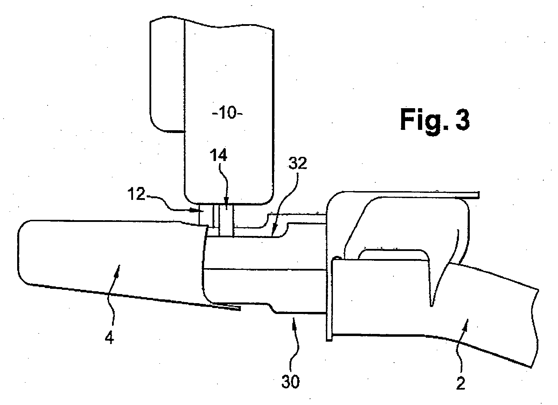

- la figure 3 est une vue de côté de la structure avant selon la figure 1,

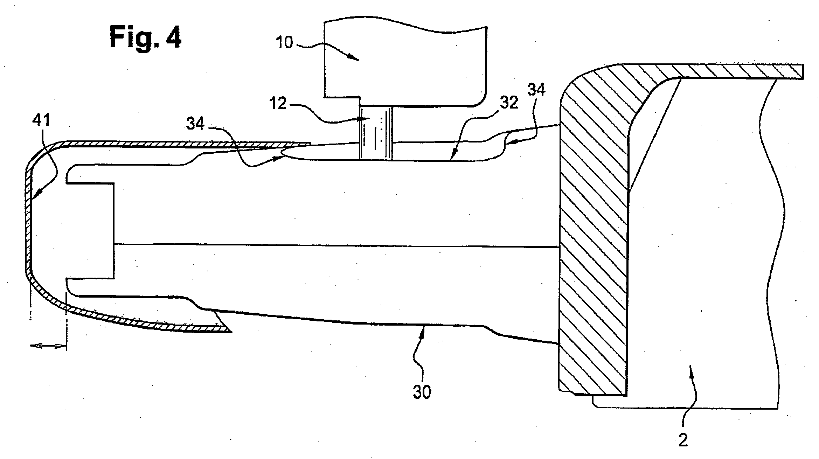

- la figure 4 est une vue de côté du boîtier de déformation selon l'invention,
- les figures 5a et 5b sont des schémas de principe d'une structure avant de véhicule respectivement avant et après choc,
- les figures 6a et 6b sont des représentations schématiques en perspectives d'une partie d'un boîtier selon l'invention.

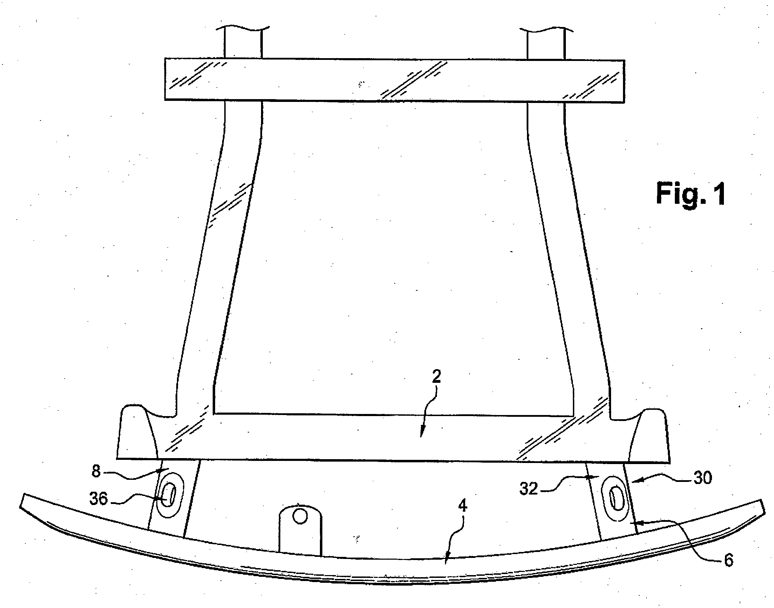

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Une structure avant 1 de véhicule automobile comporte de façon connue deux bras longitudinaux, reliés par des montants verticaux à un berceau cadre 2 qui s'étend en dessous desdits bras. En cas de gros chocs subis par le véhicule, ce sont ces éléments de structure qui doivent absorber l'ensemble des efforts de sorte qu'aucune intrusion ne se produise dans l'habitacle du véhicule.

De plus, une traverse de choc 4 est reliée au berceau cadre 2 par l'intermédiaire d'au moins deux supports latéraux 6 et 8 de sorte que cette traverse 4 est située en avant de ce berceau 2 et sensiblement à la même hauteur. Cette traverse 4, appelée traverse Danner, et les supports latéraux 6 et 8, qui sont avantageusement formés d'un boîtier de déformation plastique, sont calibrés de sorte que d'une part, ils participent à l'absorption d'énergie pour des chocs du type décrits ci dessus, et que d'autre part, ils absorbent l'intégralité du choc sans endommager le berceau 2 et/ou les bras longitudinaux, lorsque ce choc a une énergie inférieure à une norme donnée, dite norme Danner.

Pour des contraintes d'architecture, un radiateur 10 s'étend dans un plan perpendiculaire aux bras longitudinaux et est situé entre la traverse de choc 4 et le berceau cadre 2. Des moyens de fixation 12 et 14 du radiateur 10 sont prévus dans la partie inférieure du radiateur 10, et des moyens pour empêcher la rotation de ce radiateur 10 sont disposés entre la partie supérieure du radiateur 10 et les bras longitudinaux.

Au moins un des boîtiers de déformation sert de support de fixation pour la partie inférieure du radiateur 10. Le boîtier 30 selon l'invention présente une surface d'appui 32 pour un plot de fixation 12 du radiateur 10. Dans le sens longitudinal, de part et d'autre de cette surface d'appui, des bords relevés 34 proposent des amorces de pliage apte à favoriser le compactage sensiblement longitudinal des boîtiers 30 lors du choc.

Un orifice 36 est agencé dans cette surface d'appui 32 pour permettre le passage d'un plot de fixation 12 du radiateur 10. Du fait de la faible épaisseur du matériau formant ce boîtier 30, un bord tombé 38 est réalisé à la périphérie de cet orifice pour permettre le guidage du plot de fixation 12. Ce bord tombé 38, tel que représenté à la figure 6b, crée longitudinalement une résistance à l'empilage du boîtier 30 lors du choc. Un affaiblissement 40, par exemple au moyen d'un poinçonnage tel que représenté à la figure 6a, est réalisé dans chaque bord tombé 38 longitudinal afin de diminuer cette résistance longitudinale.

La partie avant du boîtier 30, qui est recouverte par la traverse de choc 4, présente une hauteur et une largeur moins importante que le reste du boîtier 30. L'ensemble présente ainsi une forme sensiblement tronconique qui, combinée avec les différentes amorces de pl iages du boîtier 30, va permettre un empilage optimal.

Le boîtier de déformation 30 et la traverse de choc 4 sont agencés de sorte qu'un jeu existe entre la face interne 41 de la traverse 4 et l'extrémité du boîtier 30 orientée vers la traverse 4. Un tel jeu permet un léger cloquage de la traverse, c'est à dire une déformation élastique minime dans le cas de faibles contacts sur le pare chocs.

Pour des raisons d'architecture, le trou de fixation 36 du plot 12 n'est pas centré par rapport à la surface supérieure du boîtier 30, tel que représenté à la figure 1. Afin d'obtenir, à moindre coût, un empilage du boîtier 30 homogène lors du choc, et afin d'éviter que la partie inférieure du boîtier 30 encaisse plus de choc et se déforme moins que la partie supérieure trouée, un orifice est également réalisé dans la face inférieure du boîtier. Une partie inférieure du boîtier symétrique à la partie supérieure par rapport au centre de ce boîtier 30 permet un décalage inertiel de la partie inférieure du boîtier inverse à celui de la partie supérieure, ce qui assure un empilage du boîtier homogène.

Avantageusement, le boîtier 30 est formé de deux demi-pièces. symétriques. La demi-pièce inférieure a pour unique fonction la fermeture du boîtier. Ainsi, pour un train avant, et donc deux boîtiers de déformation, un seul type de pièce est à réaliser.

## Revendications

1. Boîtier de déformation (30), du type disposé entre une traverse de choc (4) et la structure du véhicule, et qui comportent des amorces de pliage aptes à favoriser l'empilage longitudinal de ce boîtier (30) lors d'un choc subi par le véhicule, de sorte que le déplacement de la traverse (4) vers la structure du véhicule est accompagné et amorti par la déformation des boîtiers (30), **caractérisé en ce que** le boîtier (30) présente une forme adaptée pour la fixation d'un élément fonctionnel (10) du véhicule, ce boîtier (30) présentant une surface d'appui (32) présentant dans le sens longitudinal de part et d'autre des bords relevés (34).

2. Boîtier selon la revendication 1, **caractérisé en ce qu'**il présente une forme adaptée pour la fixation d'un radiateur (10) dans une structure avant du véhicule.

3. Boîtier selon la revendication précédente, **caractérisé en ce que** la surface d'appui (32) est munie d'un orifice (36) et de bords tombés (38) à la périphérie de cet orifice (36).

4. Boîtier selon la revendication 3, **caractérisé en ce qu'**au moins un bord tombé (38) de la surface d'appui (32) présente un affaiblissement (40).

5. Boîtier selon l'une des revendications précédentes, **caractérisé en ce qu'**il est formé de deux demi-boîtiers symétriques.

## Patentansprüche

1. Crashbox (30) der zwischen einem Aufprallquerträger (4) und der Fahrzeugstruktur angeordneten Art, die Knicklinien zur Förderung der Längszusammenlegung dieser Box (30) bei einem Aufprall des Fahrzeugs umfasst, so dass die Verschiebung des Querträgers (4) zur Fahrzeugstruktur von einer Verformung der Boxen (30) begleitet und eingedämmt wird, **dadurch gekennzeichnet, dass** die Box (30) eine für die Befestigung eines Funktionselements (10) des Fahrzeugs geeignete Form aufweist, wobei diese Box (30) eine Anlagefläche (32) aufweist, die in der Längsrichtung auf beiden Seiten hochstehende Ränder (34) aufweist.

2. Box nach Anspruch 1, **dadurch gekennzeichnet, dass** sie eine für die Befestigung eines Kühlers (10) in einer vorderen Fahrzeugstruktur geeignete Form aufweist.

3. Box nach dem vorhergehenden Anspruch, **dadurch gekennzeichnet, dass** die Anlagefläche (32) mit einer Öffnung (36) und abfallenden Rändern (38) um den Umfang dieser Öffnung (36) versehen ist.

4. Box nach Anspruch 3, **dadurch gekennzeichnet, dass** mindestens ein abfallender Rand (38) der Anlagefläche (32) eine Schwächung (40) aufweist.

5. Box nach einem der vorhergehenden Ansprüche, **dadurch gekennzeichnet, dass** sie aus zwei symmetrischen Boxenhälften gebildet ist.

## Claims

1. Deformation box (30), of the type placed between an impact bar (4) and the structure of the vehicle, and that comprises incipient folding elements capable of promoting the crumpling of this box (30) when the vehicle sustains an impact, so that the movement of the bar (4) toward the structure of the vehicle is accompanied and damped by the deformation of the boxes (30), **characterized in that** the box (30) has a shape suitable for the fastening of a functional element (10) of the vehicle, this box (30) having a bearing surface (32) having raised edges (34) on either side in the longitudinal direction.

2. Box according to Claim 1, **characterized in that** it has a shape suitable for the fastening of a radiator (10) in a front structure of the vehicle.

3. Box according to the preceding claim, **characterized in that** the bearing surface (32) is furnished with an orifice (36) and flanged edges (38) at the periphery of this orifice (36).

4. Box according to Claim 3, **characterized in that** at least one flanged edge (38) of the bearing surface (32) has a weakening element (40).

5. Box according to one of the preceding claims, **characterized in that** it is formed of two symmetrical half-boxes.
